# EUROPÄISCHE PATENTSCHRIFT

(11) **EP 2 950 901 B1**
(45) Veröffentlichungstag und Bekanntmachung des Hinweises auf die Patenterteilung: **11.01.2017**
(21) Anmeldenummer: 14708862.9
(22) Anmeldetag: 07.03.2014
(51) Int. Cl.: B01D 3/02, B01B 1/02, B01D 1/22, B01D 3/08, B01D 19/02

(54) **ROTATIONSVERDAMPFER**
ROTARY EVAPORATOR
EVAPORATEUR ROTATIF

(30) Priorität: 14.03.2013 DE 102013204459
(43) Veröffentlichungstag der Anmeldung: 09.12.2015
(73) Patentinhaber: Hans Heidolph GmbH & Co. KG, 93309 Kelheim (DE)
(72) Erfinder: CARL, Joachim, 90547 Stein (DE); JOST, Patrick Nico, 89555 Steinheim am Albuch (DE)
(74) Vertreter: Manitz, Finsterwald & Partner GbR
(86) Internationale Anmeldenummer: PCT/EP2014/054413
(87) Internationale Veröffentlichungsnummer: WO 2014/139866

(56) Entgegenhaltungen:
- EP-A1- 0 665 765
- GB-A- 1 039 709
- US-A- 3 252 502
- US-A- 4 790 911
- US-A1- 2011 100 561

## Beschreibung

Die vorliegende Erfindung betrifft einen Rotationsverdampfer zur Vakuumdestillation einer Flüssigkeit, mit einem Verdampfungskolben und einem Kühler, der dem Verdampfungskolben nachgeschaltet ist und mit diesem über eine Dampfzuführung verbunden ist.

Bei einem Rotationsverdampfer handelt es sich um ein Laborgerät, das ein Heizbad und einen in das Heizbad eintauchbaren Verdampfungskolben umfasst. Im Betrieb wird ein in dem Heizbad befindliches flüssiges Medium, beispielsweise Wasser oder - für höhere Temperaturen - Öl, geheizt, um damit den in das Heizbad eingetauchten Verdampfungskolben zu erwärmen. Hierdurch kann eine in dem Verdampfungskolben enthaltene Flüssigkeit, insbesondere ein Flüssigkeitsgemisch, erwärmt werden, so dass das jeweilige Destillat, insbesondere Lösungsmittel, verdampft wird. Das verdampfte Destillat strömt dann über eine Dampfzuführung, insbesondere ein oder mehrere Glasbauteile, in einen Kühler des Rotationsverdampfers, um dort zu kondensieren. Anschließend wird das Kondensat in einem Auffangkolben gesammelt. Darüber hinaus umfasst ein Rotationsverdampfer einen Rotationsantrieb zum Drehen des Verdampfungskolbens in dem Heizbad. Durch die Rotation wird der Verdampfungskolben gleichmäßig beheizt und an der beheizten Innenwand des Verdampfungskolbens wird ein dünner, eine große Oberfläche aufweisender Flüssigkeitsfilm erzeugt, aus dem das Destillat schnell und effizient verdampft werden kann. Der im Verdampfungskolben zurückbleibende Destillationsrückstand kann weiter aufgearbeitet oder analysiert werden.

Für Destillationen von spritzenden und schäumenden Flüssigkeiten ist es bekannt, zwischen den Verdampfungskolben und den Kühler ein Expansionsgefäß zu schalten. Gleichwohl kann es unter Umständen vorkommen, dass entstehender Schaum das Expansionsgefäß vollständig füllt und die Gefahr besteht, dass der Schaum in den Kühler und von dort in das Destillat gelangt. Um dies zu verhindern, muss der Destillationsprozess daher vorher rechtzeitig ab- bzw. zumindest unterbrochen werden.

Dokument GB 1039709 offenbart ein Rotationsverdampfer, wobei der Schaum zurück zu dem Verdampfungskolben geleitet wird. Der Erfindung liegt die Aufgabe zugrunde, einen Rotationsverdampfer der eingangs genannten Art anzugeben, mit dem ein Ab- oder Unterbrechen des Destillationsvorgangs selbst bei stark schäumenden Flüssigkeiten nicht mehr erforderlich ist.

Diese Aufgabe wird durch einen Rotationsverdampfer mit den Merkmalen das Anspruchs 1 gelöst, und insbesondere dadurch, dass im Inneren der Dampfzuführung ein Rotor mit einem mechanischen Schaumzerstörer vorgesehen ist.

Erfindungsgemäß kann durch eine Rotation des Schaumzerstörers im Inneren der Dampfzuführung aufsteigender Schaum mechanisch zerstört werden. Über den rotierenden Schaumzerstörer wirken hohe Kräfte auf den Schaum ein, die zu einer Erhöhung der Dichte des Schaums führen. Hierdurch wird der Schaum in seinem Volumen reduziert und gleichzeitig fließfähig, so dass er aus der Dampfzuführung in den Verdampfungskolben zurückfließen kann. Letztlich wird hierdurch erreicht, dass der Schaum nicht über das Höhenniveau, auf dem sich der Schaumzerstörer in der Dampfzuführung befindet, steigt.

Bevorzugt ist der Rotor dazu ausgelegt, berührungslos, insbesondere elektromagnetisch, von einer außerhalb der Dampfzuführung angeordneten Antriebseinrichtung, insbesondere einem Stator, angetrieben zu werden. Alternativ kann der Antrieb auch eine integral mit dem Rotor ausgebildete, insbesondere wiederaufladbare, Batterie umfassen. Die Batterie kann berührungslos wiederaufladbar sein, beispielsweise induktiv, kapazitiv, elektromagnetisch oder optisch. Bevorzugt wird der Rotor also durch keine in mechanischem Kontakt mit dem Rotor stehende, außerhalb der Dampfzuführung angeordnete Antriebseinrichtung angetrieben, wobei dies grundsätzlich aber auch möglich ist. Dann ist z.B. eine Antriebswelle durch die Wand der Dampfzuführung hindurchgeführt. In diesem Fall muss der Durchgang durch die Dampfzuführung abgedichtet werden.

Vorzugsweise umfasst der Stator mehrere in Umfangsrichtung insbesondere gleich verteilt angeordnete Spulen, die derart angesteuert werden, dass ein magnetisches Drehfeld bzw. ein rotierendes Magnetfeld erzeugt wird. Das rotierende äußere Magnetfeld zieht dann den Rotor mit. Der Stator kann mehrere in Umfangsrichtung insbesondere gleich verteilt angeordnete Magnetpole aufweisen, beispielsweise 2, 3, 4, 5, etc.

Der Rotor kann eine gerade Anzahl von in Umfangsrichtung insbesondere gleich verteilt angeordneten Permanentmagnetpolen, d.h. 2, 4, 6, 8, etc. Permanentmagnetpole, umfassen. Der Rotor und der Stator bilden dann einen Permanentmagnetmotor. Zwischen dem Rotor und dem Stator entsteht eine direkte magnetische Kraftwirkung. Die Permanentmagnetpole, insbesondere ein Permanentmagnet, können in einem chemisch beständigem Kunststoff gekapselt sein. Die Permanentmagnetpole können als magnetischer Mitnehmer ausgebildet sein, der mit dem Schaumzerstörer fest, zumindest drehfest, verbunden ist.

Alternativ kann der Rotor einen Kurzschlussring bzw. einen elektrisch leitfähigen Ring umfassen. Rotor und Stator bilden dann einen Kurzschlussläufermotor. Ein durch den Stator erzeugtes rotierendes äußeres Magnetfeld induziert in dem Kurzschlussring eine Spannung, die Wirbelströme im Inneren des Kurzschlussringes zur Folge hat, welche zu einem Magnetfeld des Rotors führen, das dem rotierenden Statorfeld folgt. Zur Erhöhung des magnetischen Flusses kann im Inneren des Rings ein weiterer, konzentrisch angeordneter Ring aus ferroelektrischem Material vorgesehen sein.

Der Stator kann mehrere in Umfangsrichtung insbesondere gleich verteilt angeordnete Spulen umfassen, deren Spulenachsen jeweils radial orientiert sind. Insbesondere kann der Stator als Nut-Stator ausgebildet sein bzw. einen Spulenkörper bzw. -träger mit zur Statorachse hin offenen Nuten umfassen, wobei die Spulen jeweils auf einen zwischen zwei Nuten ausgebildeten Steg aufgewickelt sind. Der Spulenkörper kann aus einem ferromagnetischem Material, z.B. geschichtetem Eisenblech oder Ferrit, hergestellt sein. Zur Isolation gegen elektrisch leitfähige Spulenkerne, beispielsweise in Form der vorgenannten Stege, können die Spulen isolierte Drähte aufweisen. Werden die Spulen von elektrischem Strom durchflossen, entsteht ein gerichtetes Magnetfeld, das auf einen Permanentmagneten unmittelbar und auf einen Kurzschlussring mittelbar wirkt.

Alternativ kann der Stator aber auch mehrere in Umfangsrichtung insbesondere gleich verteilt angeordnete Spulen mit tangential orientieren Achsen umfassen. Der Stator kann einen Ringkern umfassen, auf dem die Spulen aufgewickelt sind. Insbesondere sind die Spulen jeweils helixförmig auf den Ringkern aufgewickelt.

Bei Verwendung eines Permanentmagnetmotors erfolgt die zeitliche Ansteuerung der Spulen des Stators insbesondere in Abhängigkeit von der momentanen Drehwinkelstellung des permanentmagnetischen Rotors. Zur Erkennung der Lage des Rotors können Magnetfeldsensoren vorgesehen sein, die den Durchlauf eines Rotorpols durch eine stationäre Referenzstellung erfassen. Alternativ kann auch die von dem Rotor in dem Stator induzierte Spannung gemessen werden. Bei einem Kurzschlussring ist keine Synchronisation erforderlich. Dort kann das Statorfeld mit einer hohen Drehzahl betrieben werden, um einen hohen Wirbelstrom und damit eine große Kraftwirkung zu erzielen.

Vorzugsweise weist die Dampfzuführung eine Einsetzstelle für den Rotor auf, an der zwei voneinander separate Dampfzuführungsabschnitte der Dampfzuführung, insbesondere zwei Gefäßabschnitte eines nachstehend näher erläuterten Expansionsgefäßes, hermetisch dicht und lösbar miteinander verbunden sind. Hierdurch wird auf einfache Weise ermöglicht, den Rotor in die Dampfzuführung einzusetzen bzw. den Rotor aus der Dampfzuführung zu entnehmen. Dies ist insbesondere bei einer Reinigung oder einem Austausch des Rotors vorteilhaft.

Gemäß einer Ausführung der Erfindung ist zwischen den beiden Dampfzuführungsabschnitten ein Abstand ausgebildet, der von einem insbesondre ring- oder zylinderförmig ausgebildeten Einsatzstück überbrückt wird.

Bevorzugt sind die beiden Dampfzuführabschnitte bzw. der jeweilige Dampfzuführabschnitt und das Einsatzstück, insbesondere Flansche der beiden jeweiligen Bauteile, gegeneinander verspannt, beispielsweise mittels eines Spannrings oder Schrauben. Die Verbindung zwischen den beiden jeweiligen Bauteilen kann unter Zwischenschaltung einer jeweiligen Dichtung und/oder als Flanschverbindung, insbesondere als Vakuumflanschverbindung, z.B. als Kleinflanschverbindung (ISO-KF), ausgebildet sein. Das Einsatzstück kann ober- und unterseitig jeweils eine Nut aufweisen, in die die beiden Dampfzuführabschnitte eingreifen. Bevorzugt ist das Einsatzstück mittels einer jeweiligen in die jeweilige Nut eingelegte Dichtung gegenüber den Dampfzuführabschnitten abgedichtet. Das Einsatzstück kann beispielsweise aus Polytetrafluorethylen (PTFE) oder aus Glas oder Metall hergestellt sein.

Gemäß einer Ausbildung der Erfindung ist der Rotor in einer Lagerung einer Stützeinrichtung für den Rotor gelagert. Die Lagerung kann als Gleitlagerung, Rollenlagerung oder Magnetlagerung ausgebildet sein. Insbesondere kann die Lagerung zwei voneinander beabstandete Lager umfassen. Der Rotor kann dann zwischen einem oberen und einem unteren Lager angeordnet sein. Alternativ kann der Rotor aber auch nur einseitig gelagert sein.

Die Stützeinrichtung kann sich an den Innenwänden der Dampfzuführung abstützen. Insbesondere können an den Innenwänden der Dampfzuführung, insbesondere eines jeden Dampfzuführabschnittes, Auflager für die Stützeinrichtung vorgesehen sein. Die Auflager können in Umfangsrichtung insbesondere gleich verteilt an den Innenwänden vorgesehen sein. Die Auflager können fest an den Innenwänden der Dampfzuführung befestigt oder dort lediglich eingehängt sein. Alternativ kann die Stützeinrichtung integral mit dem vorgenannten Einsatzstück ausgebildet sein. Hierdurch kann die Anzahl voneinander separater Bauteile gering gehalten werden.

Die Stützeinrichtung kann mehrere, d.h. wenigstens zwei radial verlaufende, in Umfangsrichtung der Dampfzuführung insbesondere gleich verteilt angeordnete Stege umfassen. Die Stege können sternförmig von der Rotorachse nach außen verlaufen. Durch die Verwendung von insbesondere vergleichsweise schmalen Stegen wird gewährleistet, dass der Strömungsdurchgang der verdampften Flüssigkeit durch die Dampfzuführung nur unwesentlich durch die Stützeinrichtung beeinflusst wird. Alternativ oder zusätzlich kann die Stützeinrichtung einen dem Rotor vorgeschalteten und sich in Strömungsrichtung des Dampfes verjüngenden Trichterabschnitt aufweisen.

Der mechanische Schaumzerstörer kann als eine Schaumzentrifuge oder als ein Rührorgan, insbesondere ein Flügel- bzw. Schaufelrührer, ausgebildet sein. Bei einer Schaumzentrifuge wirken Zentrifugalkräfte bzw. Trägheitskräfte auf den Schaum ein, so dass dieser radial nach außen geschleudert und dadurch zerstört wird. Eine Schaumzentrifuge kann wenigstens einen, bevorzugt mehrere, radial nach außen gerichtete längliche Hohlkörper für den Schaum, insbesondere Rohre oder Kanäle, aufweisen, der oder die jeweils unter einem Winkel gegen die Strömungsrichtung des Dampfes geneigt sein können. Bevorzugt wird der Schaum hierbei zuvor über den vorgenannten Trichterabschnitt in der Mitte der Dampfzuführung konzentriert. Bei einem Rührorgan wird der Schaum mechanisch zerschlagen. Ein Rührorgan kann einen oder mehrere Rotorflügel aufweisen.

Bevorzugt weist die Dampfzuführung ein Expansionsgefäß auf, und der Rotor ist im Inneren des Expansionsgefäßes angeordnet ist. In der Regel besitzen Expansionsgefäße einen vergleichsweise großen Durchmesser und bieten damit ausreichend Platz für den Rotor.

Vorzugsweise ist innerhalb der Dampfzuführung ein Schaumsensor zur Detektion von in der Dampfzuführung vorhandenem Schaum angeordnet. Bei dem Sensor kann es sich beispielsweise um einen kapazitiven Sensor handeln. Wenn durch den Schaumsensor detektiert wird, dass in der Dampfzuführung vorhandener Schaum ein vorgegebenes Maß, beispielsweise eine vorgegebene Dichte oder eine vorgegebene Höhe in der Dampfzuführung, überschreitet, kann der Rotor automatisch in Rotation versetzt werden. Solange der Schaum das vorgegebene Maß noch nicht erreicht hat, ist es auch nicht erforderlich, den Rotor in Betrieb zu setzen. Grundsätzlich ist es auch möglich, das In-Betrieb-Setzen des Rotors manuell auszulösen.

Vorteilhafte Ausgestaltungen der Erfindung sind auch in den Unteransprüchen, der weiteren Beschreibung und der Zeichnung beschrieben.

Ein nicht beschränkendes Ausführungsbeispiel der Erfindung ist in der Zeichnung dargestellt und wird nachfolgend beschrieben. Es zeigen,
- Fig. 1: eine Seitenansicht eines Rotationsverdampfers mit Dampfzuführung mit Expansionsgefäß,
- Fig. 2: eine schematische Darstellung eines im Bereich eines Expansionsgefäßes vorgesehenen erfindungsgemäßen Rotors gemäß einer ersten Ausführungsform,
- Fig. 3: einen erfindungsgemäßen Rotor gemäß einer zweiten Ausführungsform, und
- Fig. 4: zwei voneinander verschiedene Varianten eines elektromagnetischen Antriebs für einen Rotor.

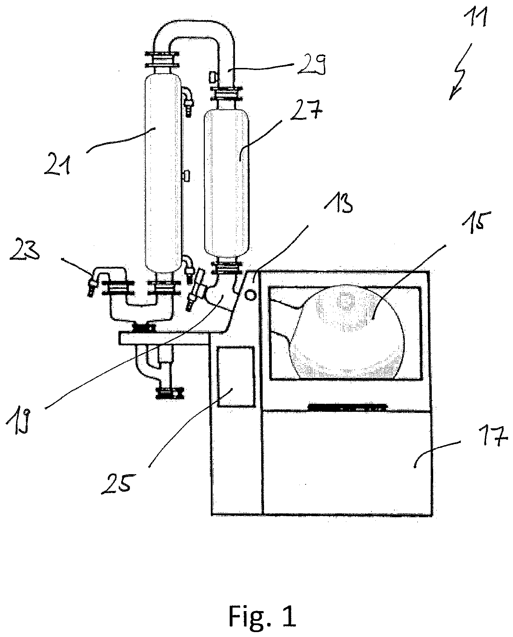

Der in Fig. 1 dargestellte Rotationsverdampfer 11 umfasst einen Rotationsantrieb 13 für einen als Rundkolben oder dergleichen ausgebildeten Verdampfungskolben 15, der in einem Heizbad 17 erwärmt werden kann, um aus einem darin befindlichen Flüssigkeitsgemisch ein Destillat zu verdampfen. Das verdampfte Destillat gelangt dann über eine durch den Rotationsantrieb 13 hindurchgeführte Dampfdurchführung 19 in einen Kühler 21, um dort zu kondensieren. Das kondensierte Destillat wird dann in einem nicht gezeigten Auffangkolben gesammelt.

An dem Kühler 21 ist ein Vakuumanschluss 23 vorgesehen, um an den Kühler 21 und den Verdampfungskolben 15 ein durch eine Vakuumpumpe erzeugtes Vakuum anzulegen, wodurch die Siedetemperatur für das Destillat gesenkt werden kann. Außerdem kann der Rotationsverdampfer 11 einen Lift umfassen, der den Rotationsantrieb 13 trägt und diesen in vertikaler Richtung verfahren kann, um den Verdampfungskolben 15 in das Heizbad 17 abzusenken oder aus diesem anzuheben. Ebenso ist es möglich, dass anstelle des Rotationsantriebs 13 das Heizbad 17 mittels eines Lifts in vertikaler Richtung verfahrbar ist. Darüber hinaus umfasst der Rotationsverdampfer 11 eine Bedieneinheit 25 zur Steuerung des Heizbades 17, des Rotationsantriebs 13, der Vakuumpumpe und des Lifts.

Nach dem Verdampfungskolben 15 und vor dem Kühler 21 ist ein Expansionsgefäß 27 angeordnet, d.h. der aus dem Verdampfungskolben 15 aufsteigende Dampf durchläuft zunächst das Expansionsgefäß 27, bevor er in dem Kühler 21 kondensiert. Hierdurch wird gegenüber einer Anordnung, bei der das Expansionsgefäß 27 weggelassen ist, der Vorteil erreicht, dass bei einem schäumenden Flüssigkeitsgemisch der Schaum nicht sofort in den Kühler und von dort unmittelbar in den Auffangkolben gelangt, sondern der Schaum sich zunächst in dem Expansionsgefäß 27 ausbreiten kann. Das Expansionsgefäß 27 ist Teil einer Dampfzuführung 29. Der Kühler 21 steht über die Dampfzuführung 29 mit dem Verdampfungskolben 15 in Fluidverbindung.

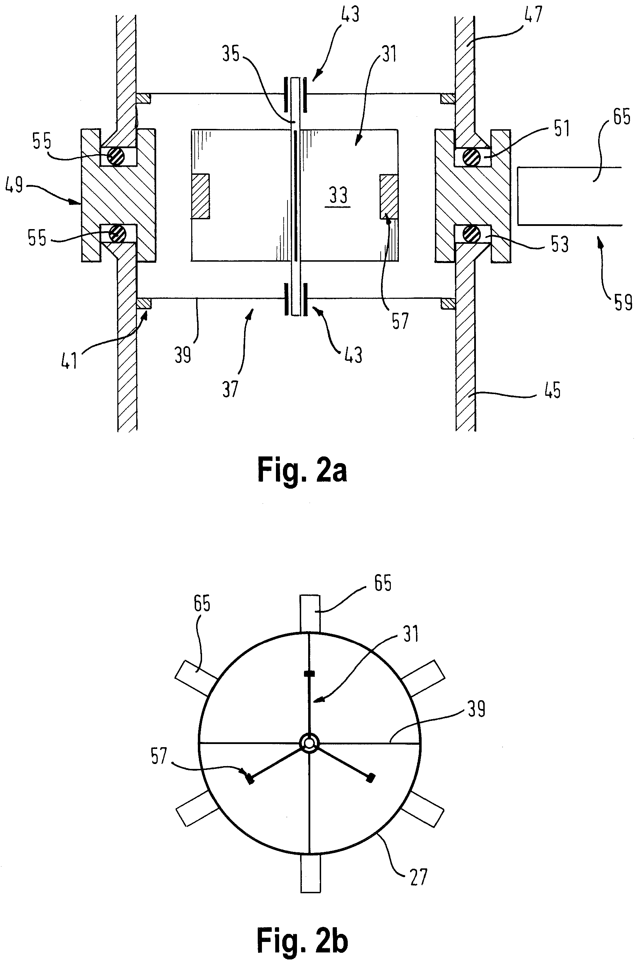

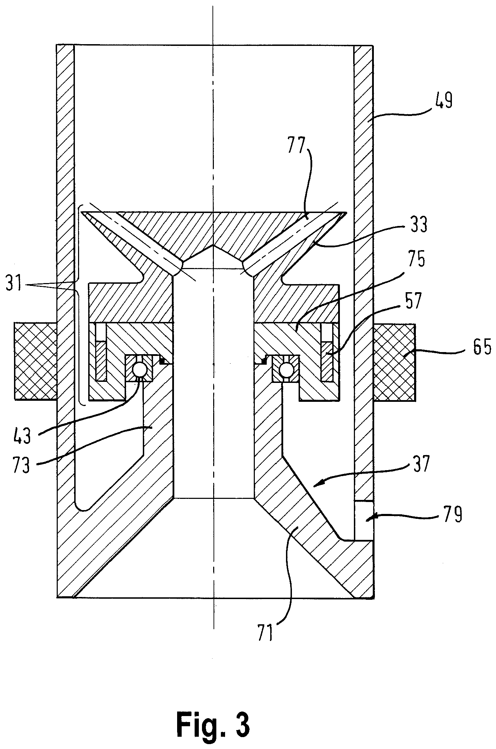

Um zu verhindern, dass der Schaum weiter ansteigt, so dass auch das Volumen des Expansionsgefäßes 27 nicht mehr ausreichen würde, um den Schaum aus dem Kühler 21 fern zu halten, ist im Bereich des Expansionsgefäßes 27 ein Rotor 31 vorgesehen (vgl. Fig. 2 und 3), mit dem der Schaum mechanisch zerstört und damit innerhalb des Expansionsgefäßes 27 gehalten werden kann.

Wie aus einem stark schematisierten Längs- bzw. Querschnitt durch ein Expansionsgefäß 27 gemäß Fig. 2a bzw. 2b ersichtlich ist, weist der innerhalb des Expansionsgefäßes 27 angeordnete Rotor 31 gemäß einer Ausführungsform der Erfindung einen Schaumzerstörer 33 in Form eines Flügelrührers mit mehreren Rotorflügeln auf, die sich von einer gemeinsamen zentralen Welle 35 jeweils radial nach außen erstrecken. Durch Rotation der Rotorflügel 33 kann der in dem Expansionsgefäß 27 befindliche Schaum mechanisch zerstört werden.

Die Rotorflügel 33 bzw. die Welle 35 sind drehbar in einer Stützeinrichtung 37 für den Rotor 31 gleitend gelagert. Die Stützeinrichtung 37 weist hierzu zwei übereinander angeordnete Stützebenen auf, die jeweils mehrere sternförmig angeordnete Stege 39 umfassen. Die Stege 39 sind über an der Innenwand des Expansionsgefäßes 27 vorgesehene Auflager 41 an dem Expansionsgefäß 27 gehaltert. Der jeweilige Mittelpunkt der sternförmigen Steganordnungen bildet eine jeweilige Lagerung 43 für den Rotor 31. Der Rotor 31 ist dabei zwischen den beiden Stützebenen angeordnet. In Fig. 2 sind pro Stützebene vier Stege 39 vorgesehen. Es können jedoch auch mehr oder weniger als vier Stege 39 vorgesehen sein, beispielsweise lediglich zwei Stege 39.

Um den Rotor 31 für eine Reinigung oder dergleichen einfach aus dem Expansionsgefäß 27 entnehmen zu können, ist das Expansionsgefäß 27 zweiteilig ausgebildet, d.h. das Expansionsgefäß 27 besitzt einen unteren Gefäßabschnitt 45 und einen oberen Gefäßabschnitt 47. Das Expansionsgefäß 27 kann daher einfach zerlegt und der Rotor 31 einfach in das Expansionsgefäß 27 eingesetzt oder aus diesem entnommen werden.

Um die Verbindungsstelle zwischen den beiden beabstandet voneinander angeordneten Gefäßabschnitten 45, 47 bzw. die Einsetzstelle für den Rotor 31 vakuumdicht und lösbar zu verschließen, ist ein Einsatzstück 49 in Form eines im Querschnitt H-förmig ausgebildeten Zwischenrings vorgesehen, der eine nach oben offene umlaufende Nut 51 und eine nach unten offene umlaufende Nut 53 aufweist, in die jeweils ein Dichtungsring 55 eingelegt ist. In die beiden Nuten 51, 53 greifen dann das untere Ende des oberen Gefäßabschnitts 47 bzw. das obere Ende des unteren Gefäßabschnitts 45 ein. Die beiden Gefäßabschnitte 45, 47 sind über eine nicht dargestellte Verspanneinrichtung gegeneinander verspannt.

Der Rotor 31 wird elektromagnetisch angetrieben. Hierzu weist der Rotor 31 einen magnetischen Mitnehmer in Form von Permanentmagneten 57 auf, die in dem vorliegenden Beispiel an den Rotorflügeln 33 angebracht sind und von einem außerhalb des Expansionsgefäßes 27 angeordneten Stator 59 berührungslos angetrieben werden. Der Stator 59 umfasst hierzu mehrere in Umfangsrichtung verteilt angeordnete Spulen 65, die derart angesteuert werden, dass ein magnetisches Drehfeld erzeugt wird, welchem der Rotor 31 folgt.

In Fig. 3 ist eine weitere Ausführungsform eines erfindungsgemäßen Rotors 31 gezeigt. Der Übersichtlichkeit halber werden für gleiche oder funktionell gleichartige Komponenten dieselben Bezugszeichen verwendet wie in der Ausführungsform gemäß den Fig. 2a und 2b, wobei zu der weiteren Ausführungsform gemäß Fig. 3 in erster Linie die Unterschiede zu der Ausführungsform gemäß den Fig. 2a und 2b erläutert werden.

In der Ausführungsform gemäß Fig. 3 umfasst die Stützeinrichtung 37 einen sich in Strömungsrichtung des Dampfes verjüngenden Trichterabschnitt 71, der einstückig mit dem Einsatzstück 49 ausgebildet ist. Der Trichterabschnitt 71 geht in einen hohlzylinderförmigen Zwischenabschnitt 73 der Stützeinrichtung 37 über, auf dem der Rotor 31 über eine Lagerung 43 gelagert ist. Der Rotor 31 umfasst einen Rotorträger 75 und einen über Schrauben fest mit dem Rotorträger 75 verbundenen Schaumzerstörer 33 in Form einer Schaumzentrifuge. In dem Rotorträger 75 sind die Permanentmagnete 57 angeordnet, die mit den das äußere Magnetfeld erzeugenden Spulen 65 zusammenwirken. In der Schaumzentrifuge 33 sind in Umfangsrichtung gleich verteilt angeordnete Bohrungen 77 ausgebildet, die in Fluidverbindung mit dem Hohlraum des Zwischenabschnitts 73 stehen und sich jeweils unter einem Winkel gegen die Strömungsrichtung des Dampfes geneigt radial nach außen erstrecken.

Im Betrieb wird in der Dampfzuführung 29 hochsteigender Schaum durch den Trichterabschnitt 71 in den zentral in der Dampfzuführung 29 angeordneten Hohlraum des Zwischenabschnitts 73 geleitet und von dort durch die in dem rotierenden Rotor 31 ausgebildeten Bohrungen 77 radial nach außen gegen die Innenwand des Einsatzstückes 49 geschleudert und dadurch zerstört. Der verflüssigte Schaum läuft dann unter Wirkung der Schwerkraft an der Innenwand des Einsatzstückes 49 herunter und kann über wenigstens einen Ablauf 79, an den ein nicht dargestellter Schlauch angeschlossen ist, aus der Dampfzuführung 29 entnommen werden. Zusätzlich oder alternativ kann in dem Trichterabschnitt 71 wenigstens eine Öffnung ausgebildet sein, so dass der verflüssigte Schaum zurück in den Verdampfungskolben 15 laufen kann.

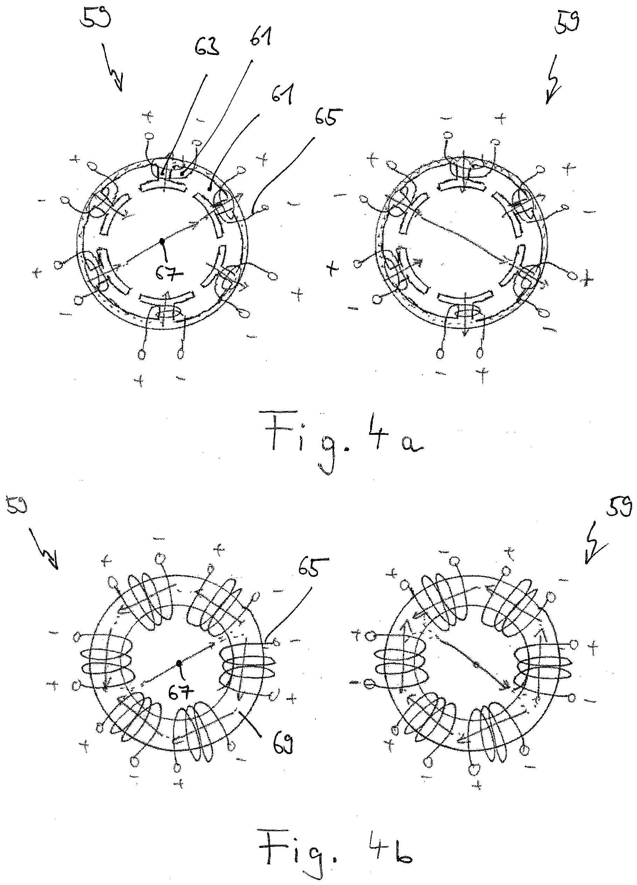

In Fig. 4a ist ein Nut-Stator 59 gezeigt. In die Nuten 61 eines Spulenkörpers 63 des Nut-Stators 59 sind in Umfangsrichtung gleich verteilt angeordnete Spulen 65 derart eingesetzt, dass die Spulenachsen radial zu der Statorachse 67 verlaufen. Der Stator 59 umfasst sechs identische Spulen 65. Grundsätzlich kann der Stator 59 jedoch auch jede beliebige andere Anzahl an Spulen 65 aufweisen. In der dargestellten Ausführungsform werden jeweils drei nebeneinander angeordnete Spulen 65 in derselben Stromrichtung betrieben, d.h. jeweils drei nebeneinander liegende Spulen 65 weisen in radialer Richtung dieselbe magnetische Orientierung auf. In Summe weist der Stator 59 damit einen sich über einen Halbkreis erstreckenden positiven Magnetpol und einen sich über einen Halbkreis erstreckenden negativen Magnetpol auf. Der magnetische Mitnehmer besteht in Fig. 4a aus einem einzelnen Permanentmagneten 57, der sich in bekannter Weise in dem äußeren zweipoligen Magnetfeld des Stators 59 ausrichtet, insbesondere auf die jeweilige mittig angeordnete Spule 65 der jeweils drei in derselben Stromrichtung betriebenen Spulen 65 zeigt. Anstelle des Permanentmagneten 57 kann auch ein Kurzschlussring verwendet werden. Um ein im oder entgegen dem Uhrzeigersinn rotierendes äußeres Magnetfeld zu erzeugen, werden die Spulen 65 derart angesteuert, dass die Trennebene zwischen dem halbkreisförmigen positiven Magnetpol und dem halbkreisförmigen negativen Magnetpol des Stators 59 schrittweise im oder entgegen dem Uhrzeigersinn wandert.

Die Spulen 65 des Stators 59 können jedoch auch derart angeordnet werden, dass die Spulenachsen jeweils tangential zu der Statorachse 67 verlaufen, wie in Fig. 4b gezeigt ist. Hierzu umfasst der Stator 59 einen gemeinsamen Ringkern 69, auf den die Spulen 65 aufgewickelt sind. Die Spulen 65 sind in Umfangsrichtung gleich verteilt angeordnet, wobei wiederum jeweils drei Spulen 65 in gleicher Richtung bestromt werden. Der Stator 59 bildet dann zwei halbringförmige Elektromagneten, die parallel zueinander liegen, wodurch insgesamt ein zweipoliger Stator 59 im Sinne der vorliegenden Anmeldung gebildet wird. An den beiden Stellen, an denen gleiche Pole aufeinander treffen, kommt es zur Feldverdrängung. Die Feldlinien treten aus dem Ring 69 radial aus und üben eine Kraft auf den innenliegenden Rotor 31 aus. Auch hier wird durch eine wechselweise Bestromung der Spulen die Richtung des Magnetfeldes derart verändert, dass sich insgesamt ein rotierendes Magnetfeld bildet.

Darüber ist ein in den Figuren nicht dargestellter Schaumsensor vorgesehen, der grundsätzlich auf Höhe oder unter- oder oberhalb des Rotors 31 im Expansionsgefäß 27 angeordnet sein kann. Beispielsweise kann durch einen oberhalb des Rotors 31 angeordneten Schaumsensor die Anwesenheit von Schaum an sich detektiert werden und auf ein entsprechendes Signal des Schaumsensors hin der Rotor 31 unabhängig von der Schaumdichte automatisch in Betrieb gesetzt werden. Bei einem unterhalb des Rotors 31 angeordneten Schaumsensor kann beispielsweise die Dichte des Schaums detektiert werden und erst bei Überschreiten eines bestimmten Grenzwerts der Rotor 31 in Betrieb gesetzt werden.

Durch den erfindungsgemäßen Rotor kann bei einem Rotationsverdampfer ein Überschäumen der zu verdampfenden Flüssigkeit in den Kühler hinein wirksam vermieden werden.

### Bezugszeichenliste

- 11: Rotationsverdampfer
- 13: Rotationsantrieb
- 15: Verdampfungskolben
- 17: Heizbad
- 19: Dampfdurchführung
- 21: Kühler
- 23: Vakuumanschluss
- 25: Bedieneinheit
- 27: Expansionsgefäß
- 29: Dampfzuführung
- 31: Rotor
- 33: Schaumzerstörer
- 35: Welle
- 37: Stützeinrichtung
- 39: Steg
- 41: Auflager
- 43: Lagerung
- 45, 47: Gefäßabschnitt
- 49: Einsatzstück
- 51, 53: Nut
- 55: Dichtungsring
- 57: Permanentmagnet
- 59: Stator
- 61: Nut
- 63: Spulenkörper
- 65: Spule
- 67: Statorachse
- 69: Ringkern
- 71: Trichterabschnitt
- 73: Zwischenabschnitt
- 75: Rotorträger
- 77: Bohrung
- 79: Ablauf

## Patentansprüche

1. Rotationsverdampfer (11) zur Vakuumdestillation einer Flüssigkeit, mit einem Heizbad (17), einem in das Heizbad (17) eintauchbaren Verdampfungskolben (15) und einem Kühler (21), der dem Verdampfungskolben (15) nachgeschaltet ist und mit diesem über eine Dampfzuführung (29) verbunden ist,
**dadurch gekennzeichnet,**
**dass** im Inneren der Dampfzuführung (29) ein Rotor (31) mit einem mechanischen Schaumzerstörer (33) vorgesehen ist.

2. Rotationsverdampfer nach Anspruch 1,
**dadurch gekennzeichnet,**
**dass** der Rotor (31) berührungslos von einer außerhalb der Dampfzuführung (29) angeordneten Antriebseinrichtung (59) oder einer integral mit dem Rotor (31) ausgebildeten Batterie angetrieben wird.

3. Rotationsverdampfer nach Anspruch 1 oder 2,
**dadurch gekennzeichnet,**
**dass** der Antrieb des Rotors (31) elektromagnetisch mittels eines Stators (59) erfolgt, der außerhalb der Dampfzuführung (29) angeordnet ist.

4. Rotationsverdampfer nach Anspruch 3,
**dadurch gekennzeichnet,**
**dass** der Stator (59) mehrere in Umfangsrichtung verteilt angeordnete Spulen (65) umfasst, die derart angesteuert werden, dass ein magnetisches Drehfeld erzeugt wird und/oder der Stator (59) mehrere in Umfangsrichtung verteilt angeordnete Magnetpole aufweist.

5. Rotationsverdampfer nach einem der vorstehenden Ansprüche, **dadurch gekennzeichnet,**
**dass** der Rotor (31) eine gerade Anzahl in Umfangsrichtung verteilt angeordneter Permanentmagnetpole (57) oder einen Kurzschlussring umfasst.

6. Rotationsverdampfer nach einem der Ansprüche 3 bis 5,
**dadurch gekennzeichnet,**
**dass** der Stator (59) mehrere in Umfangsrichtung verteilt angeordnete Spulen (65) mit radial oder tangential orientieren Achsen umfasst.

7. Rotationsverdampfer nach einem der vorstehenden Ansprüche, **dadurch gekennzeichnet,**
**dass** die Dampfzuführung (29) eine Einsetzstelle für den Rotor (31) aufweist, an der zwei voneinander separate Dampfzuführungsabschnitte (45, 47) der Dampfzuführung (29) hermetisch dicht und lösbar miteinander verbunden sind.

8. Rotationsverdampfer nach Anspruch 7,
**dadurch gekennzeichnet,**
**dass** zwischen den beiden Dampfzuführungsabschnitten (45, 47) ein Abstand ausgebildet ist, der von einem Einsatzstück (49) überbrückt wird.

9. Rotationsverdampfer nach einem der vorstehenden Ansprüche, **dadurch gekennzeichnet,**
**dass** eine Stützeinrichtung (37) mit einer Lagerung für den Rotor (31) vorgesehen ist.

10. Rotationsverdampfer nach Anspruch 9,
**dadurch gekennzeichnet,**
**dass** die Stützeinrichtung (37) sich an den Innenwänden der Dampfzuführung (29) abstützt oder integral mit einem Einsatzstück (49) ausgebildet ist.

11. Rotationsverdampfer nach Anspruch 9 oder 10,
**dadurch gekennzeichnet,**
**dass** die Stützeinrichtung (37) mehrere radial verlaufende, in Umfangsrichtung der Dampfzuführung (29) verteilt angeordnete Stege (39) oder einen dem Rotor (31) vorgeschalteten, sich in Strömungsrichtung des Dampfes verjüngenden Trichterabschnitt (71) umfasst.

12. Rotationsverdampfer nach einem der vorstehenden Ansprüche, **dadurch gekennzeichnet,**
**dass** der mechanische Schaumzerstörer (33) als eine Schaumzentrifuge oder als ein Rührorgan ausgebildet ist.

13. Rotationsverdampfer nach einem der vorstehenden Ansprüche, **dadurch gekennzeichnet,**
**dass** die Dampfzuführung (29) ein Expansionsgefäß (27) aufweist, und der Rotor (31) im Inneren des Expansionsgefäßes (27) angeordnet ist.

14. Rotationsverdampfer nach einem der vorstehenden Ansprüche, **dadurch gekennzeichnet,**
**dass** ein innerhalb der Dampfzuführung (29) angeordneter Schaumsensor zur Detektion von in der Dampfzuführung (29) vorhandenem Schaum vorgesehen ist.

15. Rotationsverdampfer nach Anspruch 14,
**dadurch gekennzeichnet,**
**dass** der Rotationsverdampfer (11) dazu ausgelegt ist, den Rotor (31) automatisch in Rotation zu versetzen, wenn durch den Schaumsensor detektiert wird, dass in der Dampfzuführung (29) vorhandener Schaum ein vorgegebenes Maß überschreitet.

## Claims

1. A rotary evaporator (11) for the vacuum distillation of a liquid, comprising a heating bath (17); an evaporator flask (15) which can dip into the heating bath (17); and a cooler (21) which is connected downstream of the evaporator flask (15) and is connected thereto via a vapor feeder (29),
**characterized in that**
a rotor (31) having a mechanical foam breaker (33) is provided in the interior of the vapor feeder (29).

2. A rotary evaporator in accordance with claim 1,
**characterized in that**
the rotor (31) is contactlessly driven by a drive device (59) arranged outside of the vapor feeder (29) or by a battery formed integrally with the rotor (31).

3. A rotary evaporator in accordance with claim 1 or claim 2, **characterized in that**
the drive of the rotor (31) takes place electromagnetically by means of a stator (59) which is arranged outside of the vapor feeder (29).

4. A rotary evaporator in accordance with claim 3,
**characterized in that**
the stator (59) comprises a plurality of coils (65) which are arranged distributed in the peripheral direction and which are controlled such that a magnetic rotary field is generated and/or such that the stator (59) has a plurality of magnetic poles arranged distributed in the peripheral direction.

5. A rotary evaporator in accordance with any one of the preceding claims,
**characterized in that**
the rotor (31) comprises an even number of permanent magnet poles (57) arranged distributed in the peripheral direction or a short-circuit ring.

6. A rotary evaporator in accordance with any one of the claims 3 to 5, **characterized in that**
the stator (59) comprises a plurality of coils (65) arranged distributed in the peripheral direction and having radially or tangentially oriented axes.

7. A rotary evaporator in accordance with any one of the preceding claims,
**characterized in that**
the vapor feeder (29) has an insertion point for the rotor (31) at which two mutually separate vapor feeder sections (45, 47) of the vapor feeder (29) are connected to one another in a hermetically sealed and releasable manner.

8. A rotary evaporator in accordance with claim 7,
**characterized in that**
a spacing which is bridged by an insertion piece (49) is formed between the two vapor feeder sections (45, 47).

9. A rotary evaporator in accordance with any one of the preceding claims,
**characterized in that**
a support device (37) having a bearing for the rotor (31) is provided.

10. A rotary evaporator in accordance with claim 9,
**characterized in that**
the support device (37) is supported at the inner walls of the vapor feeder (29) or is formed integrally with an insertion piece (49).

11. A rotary evaporator in accordance with claim 9 or claim 10, **characterized in that**
the support device (37) comprises a plurality of webs (39) extending radially and arranged distributed in the peripheral direction of the vapor feeder (29) or comprises a funnel section (71) connected upstream of the rotor (31) and tapering in the direction of flow of the vapor.

12. A rotary evaporator in accordance with any one of the preceding claims,
**characterized in that**
the mechanical foam breaker (33) is configured as a foam centrifuge or as a stirring member.

13. A rotary evaporator in accordance with any one of the preceding claims,
**characterized in that**
the vapor feeder (29) has an expansion vessel (27) and the rotor (31) is arranged in the interior of the expansion vessel (27).

14. A rotary evaporator in accordance with any one of the preceding claims,
**characterized in that**
a foam sensor arranged within the vapor feeder (29) is provided for the detection of foam present in the vapor feeder (29).

15. A rotary evaporator in accordance with claim 14,
**characterized in that**
the rotary evaporator (11) is configured to set the rotor (31) into rotation automatically when it is detected by the foam sensor that foam present in the vapor feeder (29) exceeds a predefined measure.

## Revendications

1. Évaporateur rotatif (11) pour la distillation sous vide d'un liquide, comprenant un bain chauffant (17), une ampoule de vaporisation (15) susceptible d'être plongée dans le bain chauffant (17) et un refroidisseur (21), qui est branché à la suite de l'ampoule de vaporisation (15) et qui est relié à celle-ci via une amenée de vapeur (29),
**caractérisé en ce qu'**un rotor (31) comportant un destructeur de mousse mécanique (33) est prévu à l'intérieur de l'amenée de vapeur (29).

2. Évaporateur rotatif selon la revendication 1,
**caractérisé en ce que** le rotor (31) est entraîné sans contact par un moyen d'entraînement (59) agencé à l'extérieur de l'amenée de vapeur (29), ou par une batterie réalisée de manière intégrale avec le rotor (31).

3. Évaporateur rotatif selon la revendication 1 ou 2,
**caractérisé en ce que** l'entraînement du rotor (31) a lieu par voie électromagnétique au moyen d'un stator (59) qui est agencé à l'extérieur de l'amenée de vapeur (29).

4. Évaporateur rotatif selon la revendication 3,
**caractérisé en ce que** le stator (59) inclut plusieurs bobines agencées de façon répartie en direction périphérique, qui sont pilotées de telle façon que cela produit un champ magnétique rotatif, et/ou **en ce que** le stator (59) comprend plusieurs pôles magnétiques agencés de façon répartie en direction périphérique.

5. Évaporateur rotatif selon l'une des revendications précédentes, **caractérisé en ce que** le rotor (31) inclut un nombre pair d'aimants permanents (57) agencés de façon répartie en direction périphérique, ou une bague de court-circuit.

6. Évaporateur rotatif selon l'une des revendications 3 à 5,
**caractérisé en ce que** le stator (59) inclut plusieurs bobines (65) agencées de façon répartie en direction périphérique, avec des axes orientés radialement ou tangentiellement.

7. Évaporateur rotatif selon l'une des revendications précédentes, **caractérisé en ce que** l'amenée de vapeur (29) comprend un emplacement de mise en place pour le rotor (31), emplacement auquel deux tronçons d'amenée de vapeur (45, 47) séparés l'un de l'autre de l'amenée de vapeur (29) sont reliés de façon hermétiquement étanche et détachable l'un avec l'autre.

8. Évaporateur rotatif selon la revendication 7,
**caractérisé en ce qu'**un écartement est formé entre les deux tronçons d'amenée de vapeur (45, 47), ledit écartement étant comblé par une pièce d'insert (49).

9. Évaporateur rotatif selon l'une des revendications précédentes, **caractérisé en ce qu'**il est prévu un dispositif de soutien (37) avec un palier pour le rotor (31).

10. Évaporateur rotatif selon la revendication 9,
**caractérisé en ce que** le dispositif de soutien (37) s'appuie contre les parois intérieures de l'amenée de vapeur (29) ou est réalisé de manière intégrale avec une pièce d'insert (49).

11. Évaporateur rotatif selon la revendication 9 ou 10,
**caractérisé en ce que** le dispositif de soutien inclut plusieurs barrettes (39) s'étendant radialement et agencées de façon répartie en direction périphérique de l'amenée de vapeur (29), ou bien un tronçon en entonnoir (71) branché avant le rotor (31) et qui va en se rétrécissant dans la direction d'écoulement de la vapeur.

12. Évaporateur rotatif selon l'une des revendications précédentes, **caractérisé en ce que** le destructeur de mousse mécanique (33) est réalisé sous forme d'une centrifugeuse à mousse ou d'un organe d'agitation.

13. Évaporateur rotatif selon l'une des revendications précédentes, **caractérisé en ce que** l'amenée de vapeur (29) comprend un vase d'expansion (27), et le rotor (31) est agencé à l'intérieur du vase d'expansion (27).

14. Évaporateur rotatif selon l'une des revendications précédentes, **caractérisé en ce qu'**il est prévu un détecteur de mousse, agencé à l'intérieur de l'amenée de vapeur (29), pour la détection de la mousse présente dans l'amenée de vapeur (29).

15. Évaporateur rotatif selon la revendication 14,
**caractérisé en ce que** l'évaporateur rotatif (11) est conçu pour mettre le rotor (31) automatiquement en rotation lorsque le capteur de mousse détecte que la mousse présente dans l'amenée de vapeur (29) dépasse une mesure prédéterminée.
